# EUROPÄISCHE PATENTSCHRIFT

(11) **EP 2 039 630 B1**
(45) Veröffentlichungstag und Bekanntmachung des Hinweises auf die Patenterteilung: **20.10.2010**
(21) Anmeldenummer: 08021253.3
(22) Anmeldetag: 26.11.2007
(51) Int. Cl.: B65G 21/04, B65G 39/20

(54) **Förderanlage zum Transport von Gütern**
Supply device for transporting cargo
Transporteur destiné au transport de marchandises

(30) Priorität: 24.07.2007 AT 11712007
(43) Veröffentlichungstag der Anmeldung: 25.03.2009
(62) Teilanmeldung aus: 07450209.7
(73) Patentinhaber: Innova Patent GmbH, 6960 Wolfurt (AT)
(72) Erfinder: Trieb, Herbert, 6911 Lochau (AT)
(74) Vertreter: Hehenberger, Reinhard

(56) Entgegenhaltungen:
- DE-A1- 4 323 127
- DE-A1- 10 348 516

## Beschreibung

Die gegenständliche Erfindung betrifft eine Förderanlage zum Transport von Gütern mit einem Förderband, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes zugeordnet sind, abrollen und wobei zumindest bei einem Teil der Tragbalken zwischen der Unterseite der Tragbalken und der Oberseite des Förderbandes eine aus einem elastischen Material bestehende Dichtungsleiste vorgesehen ist, welche an ihrer an den betreffenden Tragbalken anliegenden Seite mit einer metallischen Verstärkungsleiste ausgebildet ist

Bei derartigen Förderanlagen, welche z.B. aus der DE 10348516 A1 bekannt sind, ist das Förderband an der Unterseite der Tragbalken dadurch befestigt, dass über die Länge der Tragbalken mehrere im Abstand voneinander befindliche Schraubbolzen vorgesehen sind, welche die Tragbalken und das Förderband durchsetzen. Bei diesen bekannten Förderanlagen ist weiters zwischen dem Förderband und den Tragbalken eine aus einem elastischen Material bestehende Dichtungsleiste vorgesehen, welche dazu dient, ein Eindringen von Fördergut zwischen das Förderband und den Tragbalken zu vermeiden.

Den bekannten Förderanlagen haftet jedoch der Nachteil an, dass die über die Tragbalken hinausragenden Enden der Schraubbolzen durch das auf diese gelangende Fördergut einem starken Verschleiß unterliegen, wodurch es Schwierigkeiten bedingen kann, diese Schraubbolzen von den Tragbalken zu lösen, um einen Austausch von Tragbalken oder des Förderbandes vornehmen zu können.
Der gegenständlichen Erfindung liegt somit die Aufgabe zugrunde, diesen den bekannten Förderanlagen anhaftenden Nachteil zu vermeiden. Diese Aufgabe wird erfindungsgemäß dadurch gelöst, dass zumindest bei einem Teil der Tragbalken die Unterseite der Tragbalken und die an diese anliegende Verstärkungsleiste mit einander zugeordneten Federn bzw. Nuten ausgebildet sind und dass in den Tragbalken in die Verstärkungsleiste einragende Schraubbolzen vorgesehen sind.

Der Gegenstand der Erfindung ist nachstehend anhand eines in der Zeichnung dargestellten Ausführungsbeispieles näher erläutert. Es zeigen:
- FIG.1: einen Abschnitt einer Transportanlage, in axonometrischer Dar- stellung;
- FIG.2: einen Abschnitt des Förderbandes der Förderanlage gemäß
- FIG.3, FIG.3a: FIG.1, in axonometrischer Darstellung; zwei Ausführungsbeispiele der Befestigung des Förderbandes an einem Tragbalken, jeweils in Querschnitten.

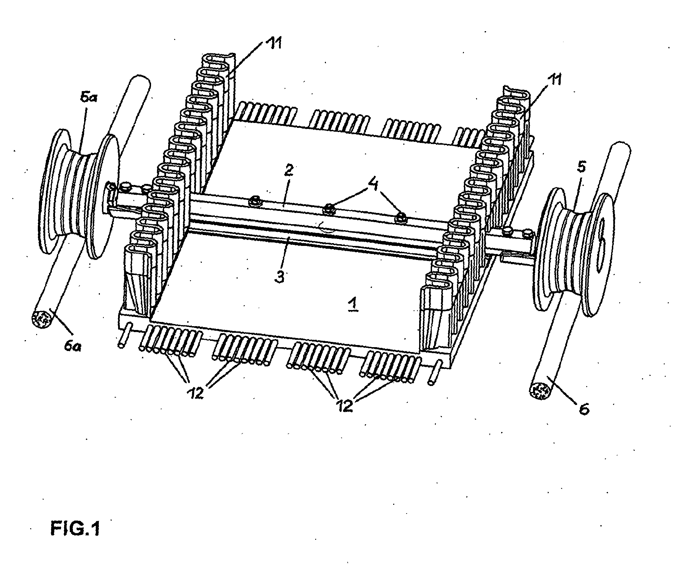

In FIG. 1 ist ein Abschnitt des Förderbandes 1 in einer Förderanlage zum Transport von Gütern dargestellt. Wie daraus ersichtlich ist, ist das Förderband 1 an seinen beiden Seitenrändern mit Wellkanten 11 ausgebildet, durch welche es ermöglicht wird, dieses an den beiden Enden der Förderanlage über Umlenktrommeln zu führen. Wie daraus weiters ersichtlich ist, ist das Förderband 1 mit einer Vielzahl von dicht nebeneinander befindlichen Verstärkungsseilen 12 ausgebildet, aufgrund welcher dieses eine große Tragfähigkeit aufweist. Das Förderband 1 ist an der Unterseite von sich quer zu dessen Bewegungsrichtung erstreckenden Tragbalken 2 befestigt, wobei sich zwischen dem Förderband 1 und den Tragbalken 2 jeweils eine elastische Dichtungsleiste 3 befindet. Durch die zwischen dem Förderband 1 und den Tragbalken 2 befindlichen Dichtungsleisten 3 wird vermieden, dass sich zwischen dem Förderband 1 und den Tragbalken 2 jeweils Spalte ausbilden, in welche Fördergut eindringt, wodurch das Förderband 1 einem erhöhten Verschleiß unterliegt.

An den beiden Enden der Tragbalken 2 befinden sich Laufrollen 5 und 5a, welche längs eines Paares von Tragseilen 6 und 6a bzw. von Tragschienen geführt sind. Dabei sind sowohl dem mit Transportgut beladenen Trum des Förderbandes 1 als auch dem unbeladenen Trum des Förderbandes 1 jeweils ein Paar von Tragseilen 6 und 6a bzw. von Tragschienen zugeordnet, längs welcher das Förderband 1 zwischen den in den Endstationen befindlichen Umlenk- bzw. Antriebstrommeln im Umlauf bewegt wird.

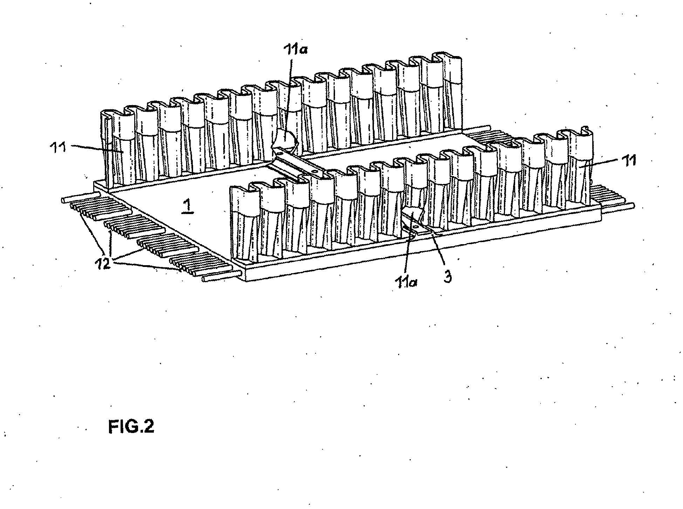

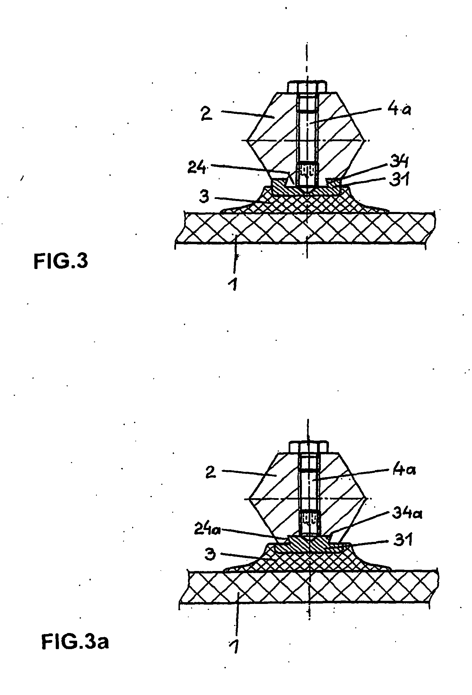

Aus FIG.2 ist ersichtlich, dass die seitlichen Wellkanten 11 mit Ausnehmungen 11a für die Tragbalken 2 ausgebildet sind und dass sich die Dichtungsleisten 3 an der Oberseite des Förderbandes 1 befinden.
Wie dies aus den FIG.3 und FIG.3a ersichtlich ist, befinden sich an der den Tragbalken 2 zugewandten Seite der Dichtungsleisten 3, welche mit dem Förderband 1 durch Verklebung verbunden sind, obere Verstärkungsleisten 31, welche mit den Dichtungsleisten 3 gleichfalls durch Verklebung verbunden sind. Beim Ausführungsbeispiel gemäß FIG.3 sind die oberen Verstärkungsleisten 31 mit einer hinterschnittenen Nut 34 ausgebildet, in welche eine von den Tragbalken 2 abragende hinterschnittene Feder 24 einragt, wodurch die Dichtungsleisten 3 und damit das Förderband 1 an den Tragbalken 2 befestigt sind. Beim Ausführungsbeispiel gemäß FIG.3a sind die Verstärkungsleisten 31 mit einer hinterschnittenen Feder 34a ausgebildet und sind die Tragbalken 2 mit hinterschnittenen Nuten 24a ausgebildet.

Durch diese beiden Ausbildungen kann das Förderband 1 in einfacher Weise mit den Tragbalken 2 lösbar verbunden werden. Um die erforderliche Lagestabilität zu erzielen, sind weiters die Tragbalken 2 von Schraubbolzen 4a durchsetzt, welche in in den Verstärkungsleisten 31 vorgesehene Bohrungen einragen.

Es wird darauf verwiesen, dass die Tragbalken 2 im Querschnitt sechseckig sind und dass sie als Vollkörper, also nicht rohrförmig, ausgebildet sind, wodurch sie auch bei einem durch das Transportgut verursachten starken Verschleiß lange Betriebszeiten ermöglichen.

## Patentansprüche

1. Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen und wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist, welche an ihrer an den betreffenden Tragbalken (2) anliegenden Seite mit einer metallischen Verstärkungsleiste (31) ausgebildet ist, **dadurch gekennzeichnet, dass** die Unterseiten der Tragbalken (2) und die an diese anliegende Verstärkungsleiste (31) mit einander zugeordneten Federn (24,34a) bzw. Nuten (24a,34) ausgebildet sind und dass in den Tragbalken (2) in die Verstärkungsleiste (31) einragende Schraubbolzen (4a) vorgesehen sind.

## Claims

1. A conveying installation for transporting goods, having a conveyor belt (1), which belt is guided at both ends of the installation over return drums and which is fastened to the underside of supporting beams (2) oriented across the direction of movement of the conveyor belt (1) and located at a distance from one another in the direction of movement of the conveyor belt (1), rollers (5, 5a) being mounted in each case at the two lateral ends of the supporting beams (2), which rollers (5, 5a) run on two pairs of supporting cables (6, 6a) or supporting rails provided along the installation, which pairs are associated with the carrying and return run of the conveyor belt (1), and a sealing strip (3) consisting of a resilient material being provided between the underside of the supporting beams (2) and the top of the conveyor belt (1) in the case of at least some of the supporting beams (2), which sealing strip (3) is provided with a metallic reinforcing strip (31) on its side resting against the relevant supporting beam (2),
**characterised in that** the undersides of the supporting beams (2) and the reinforcing strip (31) resting thereagainst are provided with mutually associated springs (24, 34a) and grooves (24a, 34) respectively and **in that** studs (4a) projecting into the reinforcing strip (31) are provided in the supporting beams (2).

## Revendications

1. Transporteur pour le transport de produits, avec une bande transporteuse (1) qui, aux deux extrémités du transporteur, passe sur des tambours de renvoi et qui est fixée au côté inférieur de poutres (2) qui sont orientées transversalement par rapport au sens de déplacement de ladite bande (1) et qui sont espacées les unes des autres dans le sens de déplacement de la bande (1), étant précisé qu'il est prévu, montés sur les deux extrémités latérales des poutres (2), des galets respectifs (5, 5a) qui roulent sur deux paires, prévues le long du transporteur, de câbles porteurs (6, 6a) ou de rails porteurs associés au brin d'avance et au brin de retour de la bande transporteuse (1), et étant précisé que sur une partie au moins des poutres (2), il est prévu entre le côté inférieur des poutres (2) et le côté supérieur de la bande transporteuse (1) une latte d'étanchéité (3) composée d'un matériau élastique, qui est pourvue sur son côté appliqué contre la poutre (2) concernée d'une latte de renforcement métallique (31), **caractérisé en ce que** le côté inférieur des poutres (2) et les lattes de renforcement (31) appliquées contre celles-ci sont pourvus de languettes (24, 34a) et de rainures (24a, 34) associées mutuellement, et **en ce qu'**il est prévu dans les poutres (2) des axes filetés (4a) qui entrent dans la latte de renforcement (31).
